# EUROPÄISCHE PATENTSCHRIFT

(11) **EP 1 493 884 B1**
(45) Veröffentlichungstag und Bekanntmachung des Hinweises auf die Patenterteilung: **25.04.2007**
(21) Anmeldenummer: 04015460.1
(22) Anmeldetag: 01.07.2004
(51) Int. Cl.: E04H 6/02, E04D 3/06, A01G 9/14

(54) **Profilträger**
Beam profile
poutre profilée

(30) Priorität: 02.07.2003 DE 10329717
(43) Veröffentlichungstag der Anmeldung: 05.01.2005
(73) Patentinhaber: BTW GmbH Brandschutztüren und Brandschutzwände, 57482 Wenden-Gerlingen (DE)
(72) Erfinder: Türpitz, Michael, 57482 Wenden-Schönau (DE)
(74) Vertreter: von Kreisler Selting Werner

(56) Entgegenhaltungen:
- EP-A- 0 511 717
- BE-A- 1 005 025
- BE-A- 1 006 632
- DE-U- 29 616 595
- FR-A- 1 380 979
- GB-A- 925 679
- GB-A- 2 111 112
- NL-C- 1 016 495
- US-A- 5 140 788
- US-A- 5 636 936

## Beschreibung

Die Erfindung betrifft einen Profilträger für ein Freistanddach mit Regenrinne, insbesondere Carport.

Freistanddächer sind freistehende Dächer, die in der Regel nur über vertikal ausgerichtete Stützen mit einem Untergrund befestigt sind. Mit den Stützen verbundene Wände sind prinzipiell nicht notwendig.

Typische Freistanddächer weisen vier vertikal ausgerichtete Stützen auf, die an ihren oberen Enden mit einem rechteckigen Rahmen verbunden sind. Der Rahmen besteht im Wesentlichen aus zwei Längsträgern und zwei Querträgern. Die Stützen, die Längsträger und die Querträger sind zur besseren Verbindung aus demselben Material, wie beispielsweise Stahl oder Holz. Stahlträger bzw. -stützen werden üblicherweise miteinander verschweißt. Holzträger bzw. -stützen werden miteinander vernagelt und/oder verleimt. Mit dem Rahmen werden verleimte Dachsparren aus Holz verbunden, die ein Gerüst für eine Dachbedeckung bilden. Als Dachbedeckung werden Dachziegel oder verzinkte bzw. beschichtete Profilbleche verwendet. In der Regel dienen die Längsträger des rechteckigen Rahmens als Dachauflager, um die Belastungen, die über die Bedachung beispielsweise durch Wind oder Schnee aufgebracht werden, über die Stützen an den Untergrund abzuleiten. Zur Abfuhr von Regenwasser werden mit den ausragenden Dachsparren Regenrinnen verbunden. Die Regenrinnen sind somit unterhalb des Dachs und unterhalb der Oberkante der vertikal verlaufenden Stützen angeordnet. Derartige Freistanddächer werden insbesondere als Carport für Kraftfahrzeuge verwendet, um diese vor Witterungseinflüssen zu schützen.

Derartige Freistanddächer weisen den Nachteil auf, dass auf Grund der unterhalb des Daches angeordneten Längsträger und Stützen eine Struktur entsteht, die einen Teil des Raumes für sich selbst benötigt.

Aus FR 1 380 979 ist es bekannt, für ein Freistanddach aus Aluminium die Regenrinne als Längsträger zu verwenden. Die Regenrinne weist zwei Rinnenwände auf, von denen die eine Rinnenwand an ihrem oberen Ende mit dem Dach verbunden ist und die andere Rinnenwand an ihrem unteren Ende mit einer Stütze verbunden ist, die sich in seitlicher Richtung von der Regenrinne und dem Dach weg erstreckt. Da der Längsträger als Regenrinne ausgeführt ist, kann er auf Grund des dünnwandigen U-förmigen Profils nur geringe statische Lasten an die Stütze weiterleiten. Insbesondere ist es nicht möglich, mit einem derartigen Freistanddach größere Strecken, d.h. Strecken größer als 3 m, insbesondere größer als 4 m, zu überspannen. Ferner ist zum Abstützen des Daches sowohl die Breite der Stütze als auch die Breite des als Regenrinne ausgeführten Längsträgers erforderlich, wodurch sich eine breite Struktur mit entsprechend großem Raumbedarf ergibt.

Aus FR 2 533 605 ist ein Freistanddach bekannt mit einem Längsträger, der ein quadratisches Hohlprofil aufweist. Mit dem Längsträger ist eine Regenrinne verbunden, die einen Rinnenboden und zwei Rinnenwände aufweist. Die Regenrinne und der Längsträger sind aus einem Stück und bilden zusammen einen Profilträger aus. Der Profilträger ist derart ausgestaltet, dass die Regenrinne neben dem Längsträger angeordnet ist. Hierzu weisen der Längsträger und die Regenrinne eine gemeinsame Wand auf, so dass eine Seitenwand des Längsträgers gleichzeitig eine Rinnenwand der Regenrinne bildet. Damit die Regenrinne von dem Dach ablaufendes Regenwasser abführen kann, ist der Längsträger von der Dachkante beabstandet unterhalb des Daches angeordnet, so dass auf Grund der mit dem Längsträger verbundenen Stützen der zur Verfügung stehende Raum unterhalb des Daches reduziert ist. Der aus dem Längsträger und der Regenrinne bestehende Profilträger weist somit eine breite Struktur mit einem entsprechend großen Raumbedarf auf, die einen Teil des Raumes unter dem Dach für sich selbst benötigt.

Aus BE 1006632 A5 ist ein Profilträger mit einer mit einem Grundträger verbundener Regenrinne bekannt, wobei der Rinnenboden der Regenrinne eine gemeinsame Wand mit dem Grundträger bildet. Am oberen Ende liegen Glasscheiben eines Daches auf, die in einer Kunststoffhalterung aufgenommen sind, um Kondenswasser abzuscheiden. Die Dachträger des Daches liegen seitlich an Befestigungsblöcken an, die sich entlang der Rinnenwand bis unterhalb des Rinnenbodens erstrecken.

Aufgabe der Erfindung ist es, einen Profilträger für ein Freistanddach zu schaffen, der eine schmale und stabile Struktur aufweist und mit deren Hilfe der zur Verfügung stehende Raum unter dem Freistanddach vergrößert werden kann.

Die Aufgabe wird erfindungsgemäß gelöst durch einen Profilträger nach Anspruch 1.

Erfindungsgemäß kann mit Hilfe des Profilträgers die Regenrinne als tragendes Bauteil ausgeführt werden, das oberhalb von Stützen des Freistanddachs angeordnet ist, so dass die Stützen, sofern überhaupt, nur teilweise unterhalb eines Daches des Freistanddachs angeordnet sind.

Der erfindungsgemäße Profilträger für das Freistanddach weist einen als Hohlprofil ausgeformten Grundträger zum Abtragen statischer Lasten auf. Mit dem Grundträger ist eine Regenrinne verbunden, die einen Rinnenboden und zwei Rinnenwände aufweist. Der Grundträger und die Regenrinne weisen eine gemeinsame Wand auf, wobei erfindungsgemäß der Rinnenboden die gemeinsame Wand ist. Die Regenrinne ist somit oberhalb des Grundträgers ausgebildet. Mindestens eine Rinnenwand der Regenrinne ist Teil einer Dachstütze. Dadurch können statische Lasten insbesondere des Daches von der Dachstütze über die Rinnenwand an den Rinnenboden und somit an den Grundträger weitergeleitet werden. Zusätzlich zu der Funktion Regenwasser abzuleiten, leitet die Regenrinne statische Lasten ab, so dass sie in der Statikberechnung mit berücksichtigt werden kann. Ferner wird durch die Kombination der oberhalb des Grundträgers angeordneten Regenrinne in einem gemeinsamen Profilträger eine schmale Struktur erreicht, die zudem sehr stabil ist, so dass mit dem Dach des Freistanddaches auch große Strecken überspannt werden können, wodurch der unterhalb des Daches zu Verfügung stehende Raum vergrößert ist.

Die Dachstütze ist als Hohlprofil ausgestaltet, so dass bei geringem Gewicht eine hohe Stabilität erreicht werden kann. Insbesondere ist die Dachstütze einstückig mit dem Grundträger verbunden, so dass nicht nur die Regenrinne sondern auch der Grundträger eine gemeinsame Wand mit der Dachstütze aufweist. Die gemeinsame Wand des Grundträgers mit der Dachstütze erstreckt sich insbesondere über die gesamte Höhe des Grundträgers. Der Grundträger weist also eine direkt mit dem Rinnenboden verbundene Seitenwand auf, die vollständig Teil der Dachstütze ist. Somit können über verschiedene Einleitungspunkte die statischen Lasten des Daches sowohl über den Rinnenboden als auch über die Seitenwand des Grundträgers an den Grundträger weitergeleitet werden. Maximalbelastungen am Umfang des Querschnitts des Grundträgers können somit reduziert werden.

Die Rinnenwände sind zum Rinnenboden hin aufeinander zulaufend ausgestaltet. Dadurch wird einerseits die Abfuhr von Regenwasser verbessert, andererseits werden rechtwinklig zueinander verlaufende Kraftflüsse vermieden. Besonders bevorzugt greifen die gegenüber der Schwerkraftrichtung schräg ausgerichteten Rinnenwände an der Verbindungsstelle zwischen dem Rinnenboden und der Seitenwand des Grundträgers an, so dass die weitergeleiteten Lasten auf zwei unterschiedliche Wände des Grundträgers aufgeteilt werden können.

Vorzugsweise weist der Profilträger im Bereich der Dachstützen und/ oder des Grundträgers eine Vertiefung auf. Die Vertiefung kann beispielsweise Verbindungsmittel aufnehmen, mit deren Hilfe beispielsweise ein Querträger mit dem Profilträger verbunden werden kann. Dadurch sind schräge galgenartige Stützstreben nicht erforderlich. Vorzugsweise ist die Vertiefung zur Aufnahme von Kabeln ausgestaltet, so dass die Vertiefung einen Kabelkanal bildet. Dadurch ist es beispielsweise möglich, innerhalb des Freistanddaches Leuchtkörper zu montieren und die hierfür erforderliche Verkabelung vor Umwelteinflüssen gut geschützt einfach zu verlegen. Insbesondere ist die Vertiefung beispielsweise mit Hilfe eines Abdeckdeckels abdeckbar und weist hierzu beispielsweise Hinterschneidungen auf, um einen Abdeckdeckel in die Vertiefung einstecken zu können.

Vorzugsweise weist der Grundträger eine Aufnahmeöffnung zur Aufnahme einer Stütze auf. Die Aufnahmeöffnung ist hierzu dem Rinnenboden gegenüberliegend angeordnet. Mit Hilfe der Aufnahmeöffnung kann die Stütze in den Grundträger eingesteckt werden und liegt dadurch beispielsweise an dem Rinnenboden an. Ferner kann die Aufnahmeöffnung eine Kontur aufweisen, die im Wesentlichen der Außenkontur der Stütze entspricht, so dass die Stütze ggf. mit ausreichendem Spiel an den Seitenwänden des Grundträgers anliegt. Dadurch kann ein Teil der statischen Lasten des Daches nahezu direkt von der Dachstütze und ggf. über den Rinnenboden an die Stütze weitergeleitet werden, so dass eine Belastung des Profilträgers reduziert wird. Ferner ergibt sich dadurch eine stabile Verbindung ohne dass hierzu Verschraubungen notwendig sind. Ggf. kann die Stütze eine Ausnehmung zur Aufnahme eines Zwischenstücks aufweisen, um mit Hilfe des Zwischenstücks die Stütze mit dem Grundträger und somit mit dem Profilträger zu verklemmen. Hierzu weist die Ausnehmung in der Stütze beispielsweise einen Ausnehmungsboden mit einem insbesondere als Gewinde ausgestalteten Verbindungsmittel auf, so dass mit Hilfe einer Schraube der Abstand des Ausnehmungsbodens zu der Seitenwand des Grundkörpers verringert werden kann. Dadurch kann das Zwischenstück zwischen dem

Ausnehmungsboden und der Seitenwand als zusätzliche Versteifung festgeklemmt werden, so dass sich eine stabile Verbindung der Stütze mit dem Profilträger ergibt.

Vorzugsweise weist die Dachstütze ein Verbindungselement auf, mit dem ein Halteelement verbunden werden kann. Das Halteelement weist statische Lasten, beispielsweise die Lasten des mit dem Halteelement verbundenen Dachs, auf. Vorzugsweise ist das Halteelement schwenkbar mit dem Verbindungselement verbunden, so dass die Montage vereinfacht ist. Ferner können unterschiedliche Winkelstellungen des Dachs ermöglicht werden, um beispielsweise die Breite des Freistanddachs und somit den Abstand zweier nebeneinanderangeordneter Profilträger individuell einstellen zu können.

Eine alternative Lösung die nicht Gegenstand der Erfindung ist, ist ein Dachträger für ein Freistanddach, der einen Basisträger und eine mit dem Basisträger verbundene Abdeckung aufweist. Zwischen dem Basisträger und der Abdeckung kann ein Dachelement angeordnet und ggf. verklemmt werden. Erfindungsgemäß sind der Basisträger und die Abdeckung mit Hilfe von Abstützstegen derart biegesteif verbunden, dass sie gemeinsam ein tragendes Bauteil ausbilden. Dadurch kann die Abdeckung zusätzlich zum Basisträger statische Lasten weiterleiten. Es ist somit möglich, die Abdeckung in die Statikberechnung des Freistanddachs einzubeziehen. Mit Hilfe der Abstützstege können Lasten von dem Basisträger zur Abdeckung und umgekehrt übertragen werden, so dass Belastungen besser verteilt werden können, ohne die hierfür erforderlichen Strukturen zu vergrößern. Somit ist es möglich, im Vergleich zu einem Dachträger, bei dem die Abdeckung nur lose mit dem Basisträger verbunden ist, mit einer schmal und stabil ausgeführten Struktur große Strecken zu überspannen, so dass der zu Verfügung stehende Raum unter dem Dach eines Freistanddachs vergrößert werden kann.

Der Basisträger ist insbesondere T-profilförmig und die Abdeckung im Wesentlichen U-profilförmig ausgebildet. Dadurch weist der Basisträger einen Mittelkörper, der dem Fuß eines T entspricht, und einen Basiskörper, der dem Dach des T entspricht, auf. Entsprechend weist die Abdeckung eine Basis auf, die jeweils an ihren Enden mit einem Schenkel verbunden ist. Vorzugsweise erfolgt die Verbindung des Basisträgers mit der Abdeckung über eine Verbindung der Basis mit dem Mittelkörper. Dadurch ist es möglich, zwischen dem Basiskörper und den Schenkeln versteifende Abstützstege anzuordnen. Ferner ist es möglich, Abstützstege vorzusehen, die mit der Basis verbunden sind und zumindest teilweise an dem Mittelkörper anliegen.

Insbesondere weist die Abdeckung eine vorzugsweise mit dem Schenkel verbundene Dichtungsaufnahme auf. Mit der Dichtungsaufnahme kann eine Dichtung verbunden werden, die an einem Dachelement anliegt, so dass insbesondere bei Glasdächern eine Beschädigung des Dachelementes vermieden ist und ein Eintritt von Regenwasser in den Dachträger verhindert wird. Die Dichtungsaufnahme erstreckt sich insbesondere über die gesamte Länge des Dachträgers, so dass die Dichtungsaufnahme gleichzeitig als Versteifungsrippe ausgestaltet ist. Zusätzlich bzw. alternativ kann sich die Dichtungsaufnahme soweit auf den Mittelkörper des Basisträgers hin erstrecken, dass sie an dem Mittelkörper anliegt und somit zusätzlich als Stützsteg ausgestaltet ist. Vorzugsweise ist die Dichtungsaufnahme paarweise mit jeweils einem Schenkel verbunden, so dass die Abdeckung insbesondere zwei oder vier Dichtungsaufnahmen aufweist. Insbesondere wenn mehrere Paare Dichtungsaufnahmen vorgesehen sind, erfolgt eine statisch günstige Versteifung des Dachträgers. Zusätzlich können die Schenkel der Abdeckung auf verschiedenen Höhen abgeschnitten werden, so dass es möglich ist, unterschiedlich dicke Dachelemente zwischen dem Basisträger und der Abdeckung anzuordnen. Dadurch kann mit Hilfe des erfindungsgemäßen Dachträgers sowohl verhältnismäßig dünnes Acrylglas als auch verhältnismäßig dicke Holzplatten befestigt werden.

Vorzugsweise ist der Mittelkörper zumindest teilweise als Hohlprofil ausgestaltet und kann insbesondere im Inneren des Hohlprofils ein Verbindungsstück aufnehmen. Dadurch wird die Verbindung von zwei Dachträgern insbesondere an der Dachspitze einfach verbunden, wobei gleichzeitig eine zusätzliche Versteifung des Dachträgers erfolgt.

Das erfindungsgemäße Freistanddach, bei dem es sich insbesondere um ein Carport handelt, weist im Wesentlichen vertikal ausgerichtete Stützen auf und ein Dach, das von einem Halteelement gehalten wird. Ferner weist das Freistanddach mindestens zwei wie vorstehend beschriebene Profilträger mit Regenrinne auf. Erfindungsgemäß sind die Regenrinnen als tragende Bauteile zur Abstützung des Dachs ausgestaltet. Das von dem Halteelement gehaltene Dach wird gestützt, indem das Halteelement über die Regenrinnen mit den Stützen verbunden ist. Insbesondere weist das Freistanddach einen wie vorstehend beschriebenen Dachträger auf.

Zur Montage können die Regenrinnen auf die oberen Enden der Stützen aufgesetzt werden, so dass sie besonders einfach mit den Stützen verbunden werden können. Die Montage der Profilträger ist dadurch deutlich vereinfacht, da die Stützen als Auflager für die Profilträger und ggf. die Regenrinnen eine sichere Positionierung gewährleisten. Ein Verrutschen des Profilträgers bei der Montage ist dadurch vermieden. Ferner werden aufwändige Positionierungshilfen für den Profilträger nicht benötigt. Darüber hinaus kann die Bauteileanzahl für das Freistanddach reduziert werden, indem die Längsträger und Querträger, die einen Rahmen zur Abstützung des Dachs bilden, eingespart werden. Durch die reduzierte Bauteileanzahl ist die Montage des Freistanddachs weiter vereinfacht.

Als tragendes Bauteil ist die Regenrinne in der Lage, Kräfte und/oder Momente, die beispielsweise durch Wind oder Schnee auf das Dach aufgebracht werden, aufzunehmen und weiterzuleiten, ohne dass die Regenrinne durch die auftretenden Belastungen beschädigt wird. Hierzu werden beispielsweise Bauteilgeometrie, Materialauswahl, Wandstärken usw. der Dachstütze und des Grundträgers entsprechend gewählt.

Vorzugsweise ist das Halteelement schwenkbar mit der Regenrinne verbunden. Dadurch ist die Montage des Freistanddachs weiter vereinfacht, da das Dach zumindest teilweise auf eine beispielsweise gegenüberliegend angeordnete Regenrinne hin geschwenkt werden kann. Dadurch ist es möglich, Ausrichtungsungenauigkeiten bzw. Lageungenauigkeiten zu kompensieren. Insbesondere wenn das Dach mit beiden Profilträgern fest verbunden ist, ergibt sich ein rahmenartiges Gebilde, das sowohl Längs- als auch Querkräfte aufnehmen und übertragen kann.

In bevorzugter Ausführungsform wird die Schwenkbarkeit des Halteelements dadurch erreicht, dass ein Schwenkelement in einem als Lagerelement ausgestalteten Verbindungselement drehbar gelagert ist. Das Lagerelement weist einen teilkreisförmigen Querschnitt auf. Das Schwenkelement ist im Wesentlichen stabförmig ausgestaltet und innerhalb des teilkreisförmigen Querschnitts des Lagerelements angeordnet. Vorzugsweise weist die Regenrinne das Lagerelement auf und das Halteelement das Schwenkelement. Es ist aber auch möglich, dass die Regenrinne das Schwenkelement aufweist und das Halteelement das Lagerelement.

Das Lagerelement weist insbesondere einen Umfangswinkel von über 180° auf. Dadurch ist das Schwenkelement beweglich und formschlüssig mit dem Lagerelement verbunden. Durch die formschlüssige Verbindung ist die Stabilität des Freistanddachs weiter verbessert. Zur Montage kann das Schwenkelement besonders einfach von der Seite durch eine Seitenöffnung eingeschoben werden. In bevorzugter Ausführungsform ist das Lagerelement derart ausgestaltet, dass das Schwenkelement in das Lagerelement eingeclipst werden kann. Das bedeutet, dass ein Teil des Lagerelements beim Einclipsen des Schwenkelements zurückfedern kann. Dadurch ist die Montage des Freistanddachs weiter vereinfacht.

In bevorzugter Ausführungsform weist die Regenrinne eine erste und eine zweite Seitenwand auf, wobei das Halteelement sowohl mit der ersten Seitenwand als auch mit der zweiten Seitenwand schwenkbar verbindbar ist. Dadurch ist es möglich, mehrere Freistanddächer nebeneinander anzuordnen und miteinander zu verbinden. Zu diesem Zweck wird mit ein- und derselben Regenrinne über jeweils ein Halteelement sowohl das Dach des einen Freistanddachs als auch das Dach eines anderen Freistanddachs verbunden. Dadurch ist es möglich, die Bauteilanzahl zur Montage von zwei Freistanddächern zu reduzieren, da die Regenrinne und weitere Bauteile, wie beispielsweise Stützen, eingespart werden können. Insbesondere könne bei entsprechend lang ausgestalteten Querträgern die zwischen den äußersten Stützen anordenbare Stützen eingespart werden, so dass beispielsweise Strecken von ca. 5,5 m überspannt werden können.

Vorzugsweise weist das Freistanddach ein die Regenrinne versteifendes Versteifungselement auf. Das Versteifungselement ist dabei insbesondere im oberen Bereich der Regenrinne angeordnet. Das Versteifungselement ist beispielsweise als Strebe ausgestaltet, die die erste und die zweite Wand der Regenrinne im oberen Bereich miteinander verbindet. Dadurch wird zusätzlich ein unbeabsichtigtes Auseinanderbiegen der Regenrinne vermieden.

Vorzugsweise erfolgt die Verbindung des Versteifungselements mit der Regenrinne gleichartig zu der Verbindung des Halteelements mit der Regenrinne. Dadurch ist es beispielsweise möglich, dass sich in Längsrichtung der Regenrinne Halteelemente und Versteifungselemente abwechseln. Somit ist es beispielsweise möglich, dass die Regenrinne über die gesamte Länge ein als Lagerschale ausgestaltetes Lagerelement aufweist, in die alternierend Halteelemente und Versteifungselemente eingeclipst sind. Vorzugsweise weist die Regenrinne zwei Paar Lagerschale auf, wobei jedes Paar jeweils mit einem der Halteelemente bzw. mit dem Versteifungselement verbindbar ist. Die Öffnungen der Lagerschalen eines Paars sind gegenüberliegend und voneinander weg gerichtet. Dadurch können in den nach oben geöffneten Lagerschalen Halteelemente und in den beiden nach unten geöffneten Lagerschalen ein Versteifungselement angeordnet werden. Dadurch wird insbesondere erreicht, dass eine bestimmte Montagereihenfolge zur Montage des Daches und der Versteifungselemente nicht eingehalten werden muss. Dadurch wird die Montage des Freistanddachs, insbesondere für Verbraucher, vereinfacht.

Zur weiteren zusätzlichen Versteifung des Freistanddachs kann das Freistanddach Querträger aufweisen, die insbesondere mit den Grundträgern der Profilträger oder mit den Stützen verbunden sind. Auch die Querträger weisen insbesondere eine Querschnittsfläche auf, die mit der Querschnittsfläche der Grundträger bzw. der Stützen identisch ist.

Die Verbindung von Stützen und/oder Grundträgern und/oder Querträgern erfolgt insbesondere formschlüssig. Hierzu weisen die Stützen und/oder die Grundträger und/oder die Querträger Hinterschneidungen auf, in die ein Verbindungsmittel, beispielsweise mit Hilfe von Ansätzen, eingesetzt bzw. eingeschoben werden kann. Zur formschlüssigen Verbindung können entsprechend ausgestaltete Verbindungsmittel in die Einschubschienen eingeschoben werden. Die Verbindungsmittel sind wiederum insbesondere mit den Stirnflächen des jeweils anderen Trägers verbunden.

Die Stützen und/oder die Grundträger und/oder die Querträger sind insbesondere als Hohlprofil ausgestaltet, die nach innen ausgerichtete Stützelemente aufweisen. Die Stützelemente sind derart ausgestaltet, dass sie ein Versteifungsmittel, das insbesondere rohrförmig ausgestaltet ist, aufnehmen können. Somit ist es möglich, die Hohlprofile mit Hilfe weiterer Hohlprofile bzw. Rohre weiter zu versteifen.

Vorzugsweise weist der Dachträger eine Abschlussblende auf, die als Anschlag für das Dachelement wirkt. Dadurch wird vermieden, dass das Dachelement bei einer Schwenkbewegung des Dachs unbeabsichtigt von dem Dachträger herunter rutschen kann.

Eine eigenständige Erfindung besteht darin, dass vorzugsweise jeweils zwei Dachträger einander gegenüber liegend angeordnet und vorzugsweise durch eine Schwenkbewegung aufeinander zu, insbesondere winklig, über ein Verbindungsstück bewegungsfest miteinander verbunden sind. Dadurch lässt sich besonders einfach ein Giebeldach erzeugen. Das Verbindungsstück kann hierbei insbesondere die korrekte Ausrichtung der beiden Dachträger zueinander gewährleisten. Ferner kann das Verbindungsstück Kräfte von einem Dachträger auf den anderen übertragen, so dass auch das Dach des Freistanddachs als tragendes Bauteil ausgestaltet werden kann. Vorzugsweise ist diese Erfindung entsprechend dem vorstehend beschrieben Freistanddach weiter ausgebildet.

Im Folgenden wird die Erfindung anhand bevorzugter Ausführungsformen unter Bezugnahme auf die anliegenden Zeichnungen näher erläutert.

Es zeigen
- Fig. 1: eine perspektivische schematische Ansicht eines erfindungsgemäßen Freistanddachs,
- Fig. 2: eine seitliche schematische Schnittansicht des in Fig. 1 dargestellten Freistanddachs,
- Fig. 3: eine schematische Schnittansicht einer Regenrinne,
- Fig. 4: eine schematische Seitenansicht eines mit der Regenrinne verbundenen in Fig. 1 dargestellten Dachs ,
- Fig. 5: eine schematische Schnittansicht des in Fig. 4 dargestellten Dachs,
- Fig. 6: eine schematische Schnittansicht eines erfindungsgemäßen Profilträgers,
- Fig. 7: eine schematische Seitenansicht des Profilträgers im zusammengebauten Zustand,
- Fig. 8: eine Explosionsansicht eines Dachträgers und
- Fig. 9: eine schematische Seitenansicht des Dachträgers im zusammengebauten zustand.

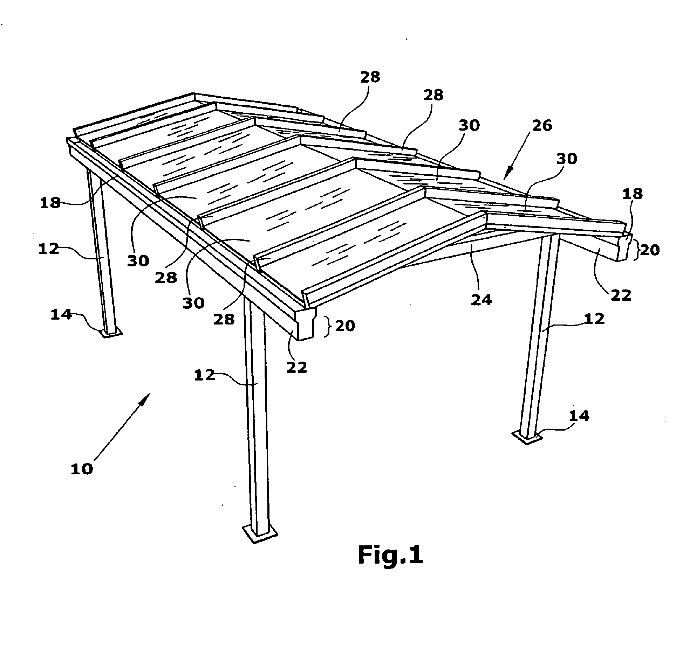

Ein erfindungsgemäßes Freistanddach 10, das in dem in Fig. 1 dargestellten Ausführungsbeispiel als Carport ausgestaltet ist, weist vier im Wesentlichen vertikal ausgerichtete Stützen 12 auf, die sich jeweils über eine Bodenplatte 14 auf einem Untergrund 16 abstützen. Mit jeweils zwei Stützen 12 ist ein Profilträger 17 mit einer als tragendes Bauteil ausgestalteten Regenrinne 18 verbunden. Der Profilträger 17 weist eine Regenrinne 18 und einen Grundträger 22 auf, wobei in einer unabhängigen Erfindung die Regenrinne 18 als tragendes Bauteil in vertikaler Verlängerung des Grundträgers 22 oberhalb des Grundträgers 22 angeordnet ist. Mit den Grundträgern 22 sind zur weitere Verstärkung zwei Querträger 24 verbunden.

Die Regenrinnen 18 sind teilweise Teil einer Dachstütze 25, so dass mit den Regenrinnen 18 ein Dach 26 verbunden ist. Das Dach 26 weist mehrere Dachträger 28 auf, mit denen jeweils Dachelemente 30 verbunden sind. Die Dachelemente 30, die im dargestellten Ausführungsbeispiel als flächige rechteckige Scheiben ausgestaltet sind, werden von den Dachträgern 28 gehalten.

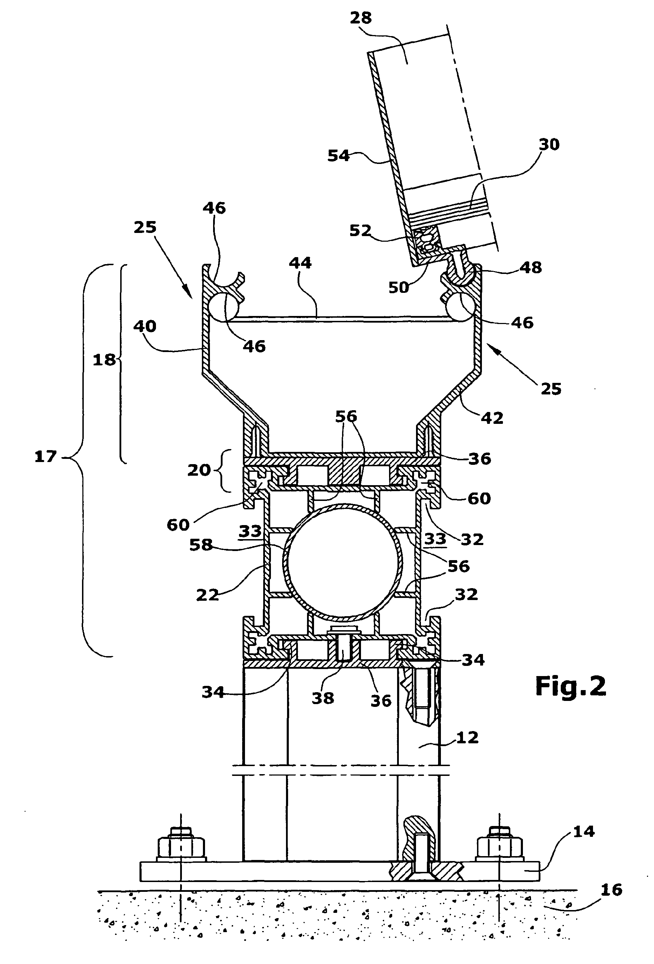

Die Bodenplatte 14 ist vorzugsweise sowohl mit dem Untergrund 16, beispielsweise über eine Dübelverbindung, als auch mit der Stütze 12, insbesondere durch Verschrauben, verbunden (Fig. 2). Mit der Stütze 12 ist der Profilträger 17 verbunden. Der Profilträger 17 weist einen mehrstückigen Rinnenboden 20 auf. Der Grundträger 22 weist einen im Vergleich zur Stütze 12 identischen Querschnitt auf. Der Grundträger 22 ist als quadratisches Hohlprofil mit Hinterschneidungen 32 ausgestaltet. Die Hinterschneidungen 32 sind auf allen vier Seiten des Grundträgers 22 angeordnet und erstrecken sich in Form einer Einschubschiene über die gesamte Länge des Grundträgers 22. Die Einschubschiene ist in einer Vertiefung 33 angeordnet, die auch als Kabelkanal ausgestaltet sein kann. In die Hinterschneidungen 32 sind Ansätze 34 des Verbindungsmittels 36 formschlüssig eingeschoben. Das untere Verbindungsmittel 36 ist mit der Stütze 12 beispielsweise zur zusätzlichen Sicherung durch eine zusätzliche Verschraubung 38 mit dem Grundträger 22 lagefixiert verbunden.

Die Regenrinne 18 weist eine erste Rinnenwand 40 und eine zweite Rinnenwand 42 auf, die jeweils über dasselbe Verbindungselement 36 mit dem Grundträger 22 verbunden sind. Sowohl mit der ersten Rinnenwand 40 als auch mit der zweiten Rinnenwand 42 ist ein als Strebe ausgestaltetes Versteifungselement 44 verbunden, das von unten in Verbindungselemente 46 eingeclipst ist.

In einer der oberen Verbindungselemente 46, das als Lagerschale ausgestaltet ist, ist ein Schwenkelement 48, das Teil eines Halteelementes 50 ist, eingeclipst. Mit dem Halteelement 50 ist ein Auflager 52, das insbesondere elastomere Bestandteile aufweist, verbunden. Über das Auflager 52 hält das Halteelement 50 das Dachelement 30. Das Halteelement 50 kann aber auch mit dem Dachträger 28 verbunden sein bzw. ein Teil des Dachträgers 28 sein. Der Dachträger 28 weist eine Abschlussblende 54 auf, die als Anschlag ein Verrutschen des Dachelements 30 verhindert.

Um den Profilträger 17 weiter zu versteifen, weist der Grundträger 22 nach innen ausgerichtete Stützelemente 56 auf zur Aufnahme eines insbesondere rohrförmig ausgestalteten Versteifungsmittels 58. Die Stabilität des Freistanddachs 10 kann durch den Querträger 24, der über ein Verbindungsmittel 36 mit dem Grundträger 22 oder mit der Stütze 12 verbunden ist, weiter erhöht werden. Der Grundträger 22 weist in den Ecken vorzugsweise eine Gewindebohrung 60 auf. Über die Gewindebohrung 60 kann an den Stirnseiten des Längsträgers 22 eine Abschlussplatte o.dgl. mit dem Längsträger 22 verbunden werden. Dies verbessert das Aussehen des Freistanddachs 10, schützt den Innenraum des Grundträgers 22 vor Feuchtigkeit und unterbindet eine Entnahme des Versteifungsmittels 58.

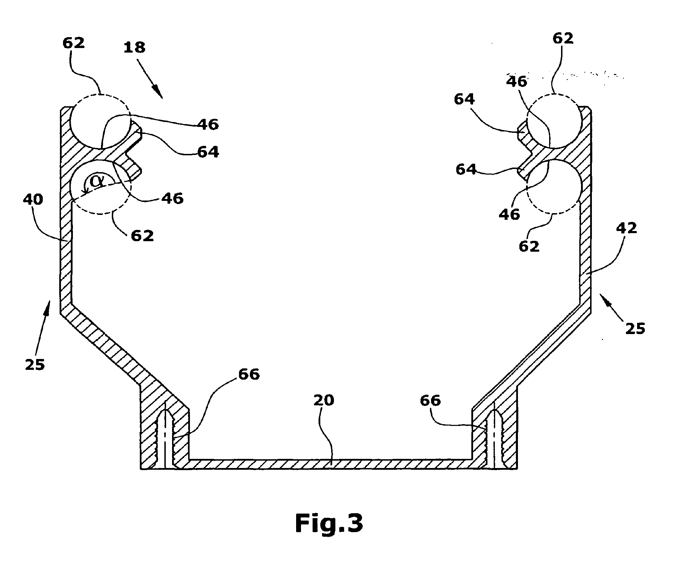

Die Regenrinne 18 weist insbesondere zwei Paare Lagerelemente bzw. Lagerschalen 46 auf (Fig. 3). Die Öffnungen 62 der im Querschnitt teilkreisförmig ausgestalteten Lagerschalen 46 der Regenrinne 18 bzw. der Dachstütze 25 sind bei einem Paar gegenüber liegend voneinander weg gerichtet.

Der Umfangswinkel α eines Lagerelements 46 beträgt über 180°, so dass das Schwenkelement 48 des Halteelements 50 formschlüssig in der Lagerschale 46 gelagert werden kann. Damit das Schwenkelement 48 in die Lagerschale 46 eingeclipst werden kann, weist die Lagerschale 46 einen Fortsatz 64 auf, der beim Einclipsen etwas zurückfedern kann. Der Fortsatz 64 weist vorzugsweise eine Anschrägung auf, derart, dass die Anschrägung ähnlich einer Zentrierung das Einclipsen des Halteelements 50 bzw. des Versteifungselements 44 vereinfacht. Auf der Innenseite des Lagerelements 46 ist vorzugsweise keine Anschrägung vorgesehen, so dass ein unbeabsichtigtes Lösen des eingeclipsten Schwenkelements vermieden ist.

Die Rinnenwände 40,42 sind über den Rinnenboden 20 miteinander verbunden. Zur Verbindung der Rinnenwände 40,42 mit der Stütze 12, insbesondere über ein Verbindungsmittel 36, weist der Rinnenboden 20 Mittel zur Verbindung der Verbindungsmittel 36 auf, wie beispielsweise ein Innengewinde 66 zur Verschraubung mit dem Verbindungsmittel 36.

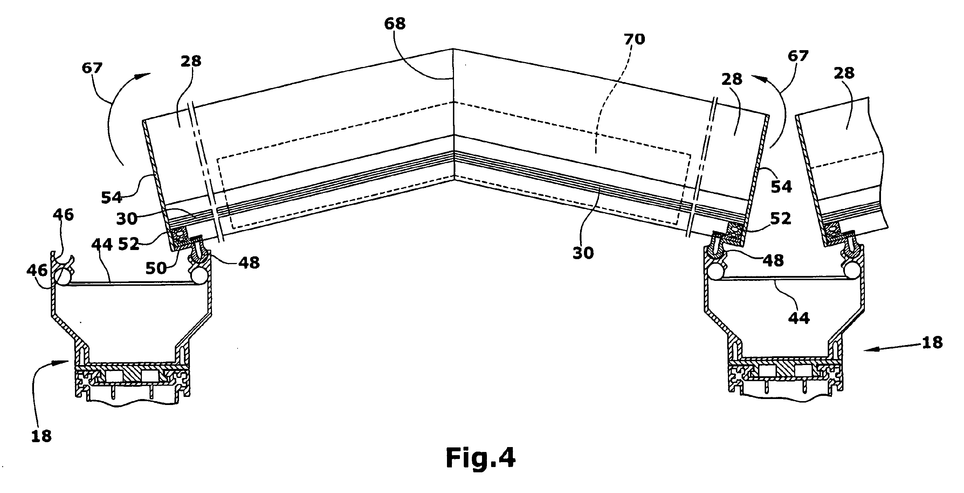

Durch die schwenkbare Verbindung des Halteelements 50 mit der Regenrinne 18 ist es möglich, zwei gegenüberliegend angeordnete Dachträger 28 durch eine Schwenkbewegung 67 aufeinander zu miteinander zu verbinden (Fig. 4). An einer Verbindungsstelle 68 liegen die Dachträger 28 sowie die Dachelemente 30 derart aneinander an, dass sie ein Giebeldach ergeben. Die beiden aneinander anliegenden Dachträger 28 sind über ein winkliges Verbindungsstück 70 miteinander verbunden.

Bei Regen kann Regenwasser an dem Dachträger 28 vorbei über das Dachelement 30, das vorzugsweise gegen die Horizontale um 12,5° ± 10° geneigt ist, in die Regenrinne 18 abfließen. Da die Regenrinne 18 vorzugsweise über die Stützen 12 hinausragt, kann das abfließende Regenwasser, das aus der Regenrinne 18 herausfließt, besonders einfach, beispielsweise in einer Regenwassertonne, aufgefangen werden. Insbesondere wenn der obere Teil der Regenrinne 18 über den Grundträger 22 hinausragt, wird vermieden, dass Regenwasser ins Innere des Grundträgers 22 eindringen kann.

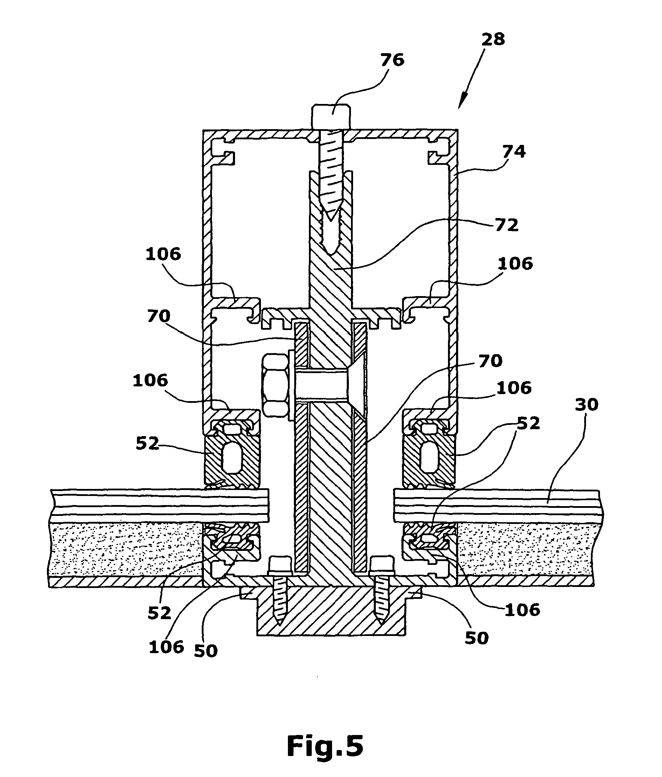

Um das Verbindungsstück 70 mit beiden Dachträgern 28 einfach montieren zu können, ist der Dachträger 28 mehrstückig ausgeführt (Fig. 5). Der Dachträger 28 weist einen T-förmigen Basisträger 72 auf, der mit dem Halteelement 50 verbunden ist und über ein Auflager 52, das auch als Dichtung wirkt, das Dachelement 30 hält. Mit dem Basisträger 72 wird das Verbindungsstück 70 beispielsweise durch Verschrauben verbunden. Nach der Verbindung des Verbindungsstücks 70 mit dem Basisträger 72 wird mit dem Basisträger 72 eine Abdeckung 74 beispielsweise durch Verschrauben verbunden. Die Abdeckung 74 weist ebenfalls ein Auflager 52 auf, so dass das Dachelement 30 zwischen dem Bassträger 72 und der Abdeckung 74 rutschfest befestigt werden kann. Die Anpreßkraft, die auf das Dachelement 30 ausgeübt wird, kann von außen über eine Schraube 76, welche die Abdeckung 74 mit dem Basisträger 72 verbindet, eingestellt werden.

Vorzugsweise sind sämtliche Bauteile des Freistanddachs 10 über lösbare Verbindungen miteinander verbunden. Dadurch wird erreicht, dass das Freistanddach nicht nur einfach montiert, sondern auch einfach demontiert werden kann. Dies ist insbesondere für Mieter vorteilhaft, die auf einem gemieteten bzw. gepachteten Grundstück ein Carport errichten möchten. Nach Beendigung des Miet- bzw. Pachtverhältnisses kann das erfindungsgemäße Carport 10 vollständig zerstörungsfrei demontiert werden und an einem anderen Ort wieder aufgebaut werden. Der Gebrauch bzw. die Funktionalität des Carports 10 wird dadurch nicht beeinträchtigt.

Zur Montage des erfindungsgemäßen Freistanddachs 10 werden zunächst die Stützen 12 über die Bodenplatten 14 mit dem Untergrund 16 verbunden (Fig. 2). Mit jeweils zwei Stützen 12 wird das Verbindungsmittel 36 verschraubt. Anschließend wird die vormontierte Regenrinne 18 als Ganzes auf das Verbindungsmittel 36 aufgeschoben. Alternativ kann zunächst der Grundträger 22 auf das Verbindungsmittel 36 aufgeschoben und ggf. verschraubt werden, wonach mit Hilfe eines weiteren Verbindungsmittels 36 die Regenrinne 18 auf den Grundträger 22 aufgeschoben wird. Anschließend wird das Versteifungsmittel 58 in den Grundträger 22 eingeschoben. Wahlweise können danach die Querträger 24 mit Hilfe von weiteren Verbindungsmitteln 36 mit den Grundträgern 22 oder Stützen 12 verbunden werden. Anschließend werden die Stirnseiten der Grundträger 22 durch Verschrauben mit einer Abschlussplatte bedeckt. Zur Montage des Dachs 26 werden jeweils zwei Basisträger 72, die über Halteelemente mit jeweils einer der Regenrinnen 18 verbunden sind, aufeinander zu geschwenkt und mit Hilfe des Verbindungsstücks 70 miteinander verschraubt. Anschließend werden Abschlussblenden 54 mit den nach außen gerichteten Stirnseiten der Basisträger 72 verbunden. Danach werden die Dachelemente 30 auf die Auflager 52 der Basisträger 72 aufgelegt. Abschließend werden die Abdeckungen 74 mit den Basisträgern 72 verbunden.

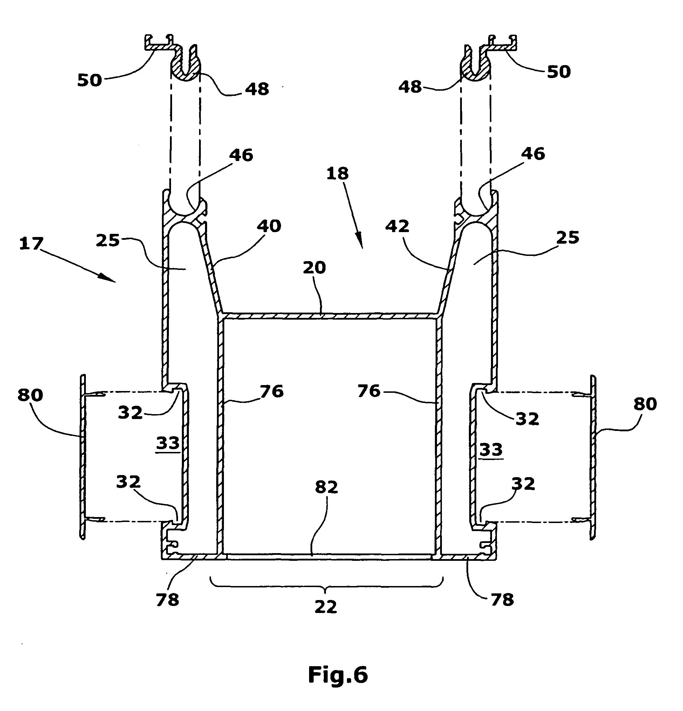

Der erfindungsgemäße Profilträger 17 weist den Grundträger 22 und die direkt oberhalb des Grundträgers 22 angeordnete Regenrinne 18 auf (Fig. 6). Der Rinnenboden 20 der Regenrinne 18 bildet eine gemeinsame Wand, die sowohl Teil der Regenrinne 18 als auch Teil des Grundträgers 22 ist. Der Profilträger 17 weist ferner die Dachstützen 25 auf, die über die Verbindungselemente 46 die statischen Lasten, die über die Halteelemente 50 eingeleitet werden, aufnehmen. Die Profilträger 17 im dargestellten Ausführungsbeispiel kann den in

Fig. 2 dargestellten Profilträger 17 ersetzen und ggf., wie in Fig. 2 dargestellt, weitergebildet sein. Die Rinnenwände 40, 42 der Regenrinne 18 bilden mit den als Hohlprofil ausgestalteten Dachstützen 25 eine gemeinsame Wand, so dass die von den Dachstützen 25 aufgenommenen statischen Lasten über die Rinnenwände 40, 42 an den Grundträger 22 weitergeleitet werden können. Der Grundträger 22 weist Seitenwände 76 auf, die ebenfalls eine gemeinsame Wand mit den Dachstützen 25 bilden. Die Dachstützen 25 weisen jeweils eine Unterseite 78 auf, die mit dem unteren Ende der Seitenwände 76 abschließt, so dass die Unterseiten 78 zusammen mit dem Grundträger 22 eine im Wesentlichen ebene Fläche ausbilden.

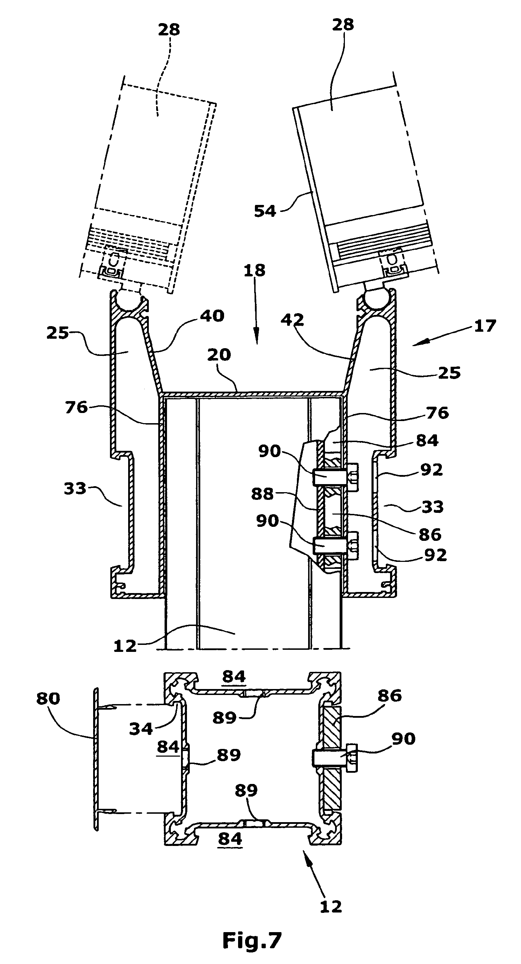

Im dargestellten Ausführungsbeispiel weisen die Dachstützen 25 jeweils die Ausnehmung 33 zur Aufnahme von Kabeln oder dgl. auf. Die Vertiefungen 33 können mit Hilfe von Abdeckdeckeln 80, die in die Hinterschneidungen 32 einsteckbar sind, verschlossen werden. Der Grundträger 22 weist in der dem Rinnenboden 20 gegenüberliegenden Seite eine Aufnahmeöffnung 82 zur Aufnahme einer Stütze 12 auf. Nach Aufnahme der Stütze 12 (Fig. 7) kann die Stütze 12 mit dem Profilträger 17 verbunden werden. Hierzu weist die Stütze 12 eine Ausnehmung 84 auf, in der ein Zwischenstück 86 angeordnet werden kann. Die Ausnehmung 84 weist einen Ausnehmungsboden 88 mit einer Wandstärke von ca. 4 mm auf. In dem Ausnehmungsboden 88 sind zwei Gewinde 89 vorgesehen, um mit Hilfe von Schrauben 90 das Zwischenstück 86 zwischen dem Ausnehmungsboden 88 und der Seitenwand 76 des Grundkörpers 22 zu verklemmen, so dass sich eine stabile und steife Verbindung der Stütze 12 mit dem Profilträger 17 ergibt. Es können auch in jeder der im Ausführungsbeispiel vier Ausnehmungen 84 der Stütze 12 Zwischenstücke 86 vorgesehen werden. Zur Vereinfachung der Verschraubung kann im dargestellten Ausführungsbeispiel die Dachstütze 25 in der Vertiefung 33 Öffnungen 92 aufweisen.

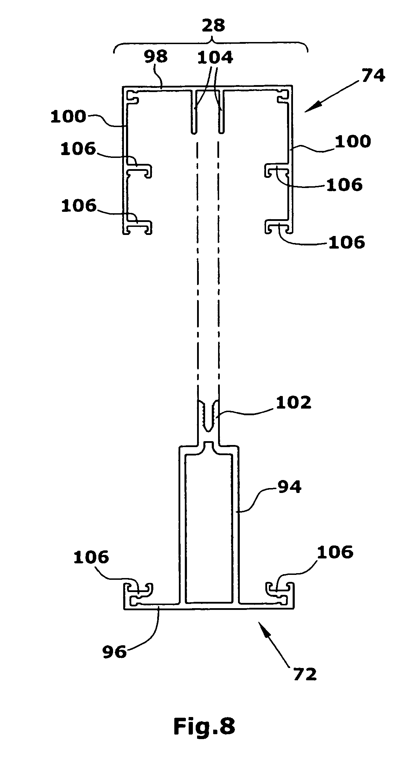

Der Dachträger 28 weist den Basisträger 72 und die Abdeckung 74 auf (Fig. 8). Der Basisträger 72 ist im Wesentlichen T-profilförmig ausgestaltet mit einem Mittelkörper 94 und einem Basiskörper 96. Die Abdeckung 74 ist im Wesentlichen U-profilförmig mit einer Basis 98 und zwei Schenkeln 100 ausgebildet. Der Mittelkörper 94 des Basisträgers 72 ist teilweise als Hohlprofil ausgestaltet, um beispielsweise das Verbindungsstück 70 aufzunehmen. Oberhalb des hohl ausgeführten Bereichs des Mittelkörpers 94 ist der Mittelkörper 94 massiv ausgeführt, um eine Verschraubung der Abdeckung 74 mit dem Basisträger 72 über eine Verbindung der Basis 98 mit dem Mittelkörper 94 zu ermöglichen. Der massiv ausgeführte Bereich des Mittelkörpers 94 bildet einen Verbindungskörper 102, der schmaler ausgeführt sein kann als der hohl ausgeführte Bereich des Mittelkörpers 94.

Mit der Basis 98 der Abdeckung 74 sind Anschlussstege 104 verbunden, die im verbundenen Zustand der Abdeckung 74 mit dem Basisträger 72 seitlich an dem Verbindungskörper 102 anliegen, wodurch sich eine derart biegesteife Verbindung ergibt, dass der Basisträger 72 und die Abdeckung 74 gemeinsam ein tragendes Bauteil ausbilden.

Der Basisträger 72 und die Abdeckung 74 weisen Dichtungsaufnahmen 106, zur Aufnahme von Dichtungen bzw. Auflagen 52 auf. Die Dichtungsaufnahmen 106 weisen eine zusätzliche Versteifungswirkung auf und können, beispielsweise wenn die Dichtungsaufnahmen 106 der Abdeckung 4 an dem Mittelkörper 94 anliegen, zusätzlich als Stützsteg ausgestaltet sein.

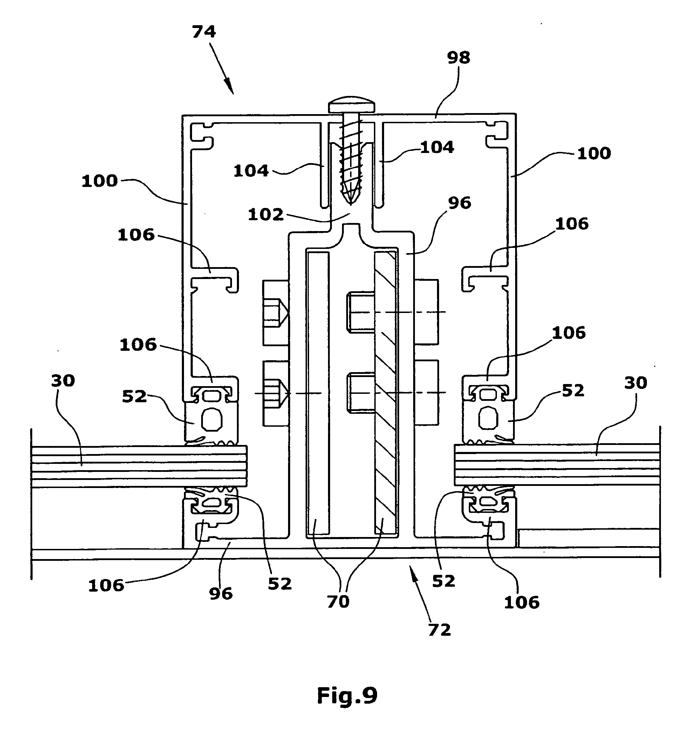

Im zusammengebauten Zustand des Dachträgers 28 (Fig. 9) sind zwischen dem Basisträger 72 und der Abdeckung 74 die Dachelemente 30 befestigt. Im hohlen Bereich des Mittekörpers 96 sind zwei Verbindungsstücke 70 verschraubt, so dass insbesondere an der Dachspitze des Daches 26 eine stabile Verbindung erfolgt. Gleichzeitig wird der Dachträger 28 durch die Verbindungsstücke 70 zusätzlich versteift.

## Patentansprüche

1. Profilträger für ein Freistanddach, mit
einem als Hohlprofil ausgeformten Grundträger (22) zum Abtragen statischer Lasten und
einer mit dem Grundträger (22) verbundenen Regenrinne (18), die einen Rinnenboden (20) und zwei Rinnenwände (40, 42) aufweist, wobei der Grundträger (22) und die Regenrinne (18) eine gemeinsame Wand aufweisen, wobei
der Rinnenboden (20) die gemeinsame Wand ist und
mindestens eine Rinnenwand (40, 42) zur Weiterleitung statischer Lasten zum Grundträger (22) Teil einer Dachstütze (25) ist,
**dadurch gekennzeichnet, dass**
die Dachstütze (25) als Hohlprofil ausgestaltet ist,
wobei der Grundträger (22) eine direkt mit dem Rinnenboden (20) verbundene Seitenwand (76) aufweist, die vollständig Teil der Dachstütze (25) ist, und
die Rinnenwände (40, 42) zum Rinneboden (20) hin aufeinander zulaufend ausgestaltet sind, und
die Dachstütze (25) ein Lagerelement (46) zur Aufnahme eines Dachhalteelements (50) aufweist,
wobei der Umfangswinkel α des Lagerelements (46) über 180° beträgt, so dass ein Schwenkelement (48) des Halteelements (50) formschlüssig in dem Lagerelement (46) gelagert werden kann, und wobei die Einleitung statischer Lasten über die Dachstütze (25) zum Grundträger (22) ausschließlich an dem zum Dach (26) weisenden Ende der Dachstütze
(25) erfolgt.

2. Profilträger nach Anspruch 1, **dadurch gekennzeichnet, dass** die Dachstütze (25) einstückig mit dem Grundträger (22) ausgestaltet ist.

3. Profilträger nach Anspruch 1 oder 2, **dadurch gekennzeichnet, dass** die Dachstütze (25) und/ oder der Grundträger (22) eine Vertiefung (33) zur Aufnahme von Kabeln und/ oder Verbindungsmitteln (36) aufweist.

4. Profilträger nach einem der Ansprüche 1 - 3, **dadurch gekennzeichnet, dass** der Grundträger (22) mindestens eine dem Rinnenboden (20) gegenüberliegende Aufnahmeöffnung (82) zur Aufnahme einer Stütze (12) aufweist.

5. Profilträger nach einem der Ansprüche 1 - 4, **dadurch gekennzeichnet, dass** die Dachstütze (25) ein Verbindungselement (46) zum insbesondere schwenkbaren Verbinden mit einem statische Lasten aufweisenden Halteelement (50) aufweisen.

## Claims

1. A beam profile for a free-standing roof, comprising
a basic carrier (22) formed as a hollow section for carrying static loads, and
an eaves gutter (18) connected to the a basic carrier (22) and comprising a gutter bottom (20) and two gutter walls (40,42), the basic carrier (22) and the eaves gutter (18) comprising a common wall, wherein
said common wall is formed by the gutter bottom (20) and
at least one gutter wall (40,42) for transmitting static loads to the basic carrier (22) is provided as part of a roof support (25), **characterized in that**
the roof support (25) is configured as a hollow section,
the basic carrier (22) comprises a side wall (76) directly connected to the gutter bottom (20), the complete side wall (76) forming part of the roof support (25), and
the gutter walls (40,42) are arranged to converge towards each other in the direction towards the gutter bottom (20), and
the roof support (25) comprises a bearing element (46) for receiving a roof holding element (50),
the circumferential angle α of the bearing element (46) is larger than 180° such that a hinge element (48) of the holding element (50) can be supported in the bearing element (46) in positive engagement therewith, and the introduction of static loads via the roof support (25) to the basic carrier (22) is performed exclusively on the portion of the roof support (25) facing towards the roof (26).

2. The beam profile according to claim 1, **characterized in that** the roof support (25) is provided integrally with the basic carrier (22).

3. The beam profile according to claim 1 or 2, **characterized in that** the roof support (25) and/or the basic carrier (22) is provided with a recess (33) for accommodating cables and/or connection means (36).

4. The beam profile according to any one of claims 1 - 3, **characterized in that** the basic carrier (22) is provided with at least one receiving opening (82) arranged opposite to the gutter bottom (20) and provided for receiving a support (12).

5. The beam profile according to any one of claims 1 - 4, **characterized in that** the roof supports (25) are provided with a connection element (46) for connection, particularly pivotable connection, to a holding element (50) comprising static loads.

## Revendications

1. Poutre profilée pour un toit sur pieds, comportant :
une poutre principale (22) façonnée en profilé creux, pour évacuer des charges statiques, et
une gouttière (18) reliée à la poutre principale (22), gouttière qui présente un fond (20) de gouttière et deux parois (40, 42) de gouttière, la poutre principale (22) et la gouttière (18) présentant une paroi commune,
le fond (20) de la gouttière étant la paroi commune, et
une paroi (40, 42), au moins, de la gouttière faisant partie d'un pied de soutien de toit (25) afin de transmettre des charges statiques à la poutre principale (22), **caractérisée en ce que**
le pied de soutien de toit (25) est conçu sous forme d'un profilé creux,
la poutre principale (22) présentant une paroi latérale (76) qui est reliée directement au fond (20) de la gouttière et qui fait complètement partie du pied de soutien de toit (25), tandis que
les parois (40, 42) de la gouttière sont conçues convergentes l'une vers l'autre en direction du fond (20) de la gouttière, et que
le pied de soutien (25) du toit présente un élément formant palier (46) destiné à recevoir un élément de support (50) du toit,
l'angle de portée α de l'élément formant palier (46) étant supérieur à 180°, afin qu'un élément de pivotement (48) de l'élément de support (50) puisse être monté, par complémentarité de formes, dans l'élément formant palier (46), et l'application de charges statiques à la poutre principale (22) par l'intermédiaire du pied de soutien de toit (25) se faisant exclusivement à l'extrémité, tournée vers le toit (26), du pied de soutien de toit (25).

2. Poutre profilée selon la revendication 1, **caractérisée en ce que** le pied de soutien de toit (25) est réalisé d'un seul tenant avec la poutre principale (22).

3. Poutre profilée selon la revendication 1 ou 2, **caractérisée en ce que** le pied de soutien de toit (25) et/ou la poutre principale (22) présente un renfoncement (33) pour le logement de câbles et/ou de moyens de raccordement (36).

4. Poutre profilée selon l'une des revendications 1 à 3, **caractérisée en ce que** la poutre principale (22) présente au moins une ouverture de réception (82) disposée en vis-à-vis du fond (20) de la gouttière et destinée à recevoir un pied de soutien (12).

5. Poutre profilée selon l'une des revendications 1 à 4, **caractérisée en ce que** le pied de soutien de toit (25) présente un élément de jonction (46) destiné à réaliser une jonction, en particulier pivotante, avec un élément de support (50) présentant des charges statiques.
